# EUROPEAN PATENT SPECIFICATION

(11) **EP 0 870 587 B1**
(45) Date of publication and mention of the grant of the patent: **08.01.2003**
(21) Application number: 97309903.9
(22) Date of filing: 09.12.1997
(51) Int. Cl.: B29C 45/00, F16J 15/14, F16L 13/11

(54) **Liquid injection sealing apparatus**
Dichtungseinspritzvorrichtung
Dispositif d'étanchéité par injection d'un liquide

(30) Priority: 17.12.1996 US 767908
(43) Date of publication of application: 14.10.1998
(73) Proprietor: Ford Global Technologies, Inc., Dearborn, Michigan 48126 (US)
(72) Inventor: Decello, Michael John, Novi, Michigan 48375 (US); Papciak, Edward Stanley, Novi,Michigan 48374 (US); Radabaugh, Scott Louis, Milford, Michigan 48381 (US)
(74) Representative: Messulam, Alec Moses

(56) References cited:
- EP-A- 0 630 729
- EP-A- 0 671 575
- WO-A-95/20102
- DE-A- 4 210 687
- GB-A- 2 115 084
- US-A- 3 499 387
- PATENT ABSTRACTS OF JAPAN vol. 009, no. 168 (M-396), 13 July 1985 & JP 60 040868 A (ISEKI NOKI KK), 4 March 1985
- PATENT ABSTRACTS OF JAPAN vol. 018, no. 289 (M-1614), 2 June 1994 & JP 06 055554 A (TOSHIBA SILICONE CO LTD), 1 March 1994
- PATENT ABSTRACTS OF JAPAN vol. 017, no. 379 (M-1447), 16 July 1993 & JP 05 065960 A (TOYOTA MOTOR CORP), 19 March 1993
- NOLAN D: "CHEMICAL GASKETING FOR AUTOMOTIVE POWERTRAINS" AUTOMOTIVE ENGINEERING, vol. 101, no. 8, August 1993, pages 27-32, XP000395018 warrendale, PA, US

## Description

The present invention relates generally to forming gaskets *in situ* between mating components. More particularly, the present invention relates to forming gaskets or seals between mating components using liquid injection sealing.

It is well known in the automotive and machinery industries to use a pre-formed gasket between two mating components to prevent fluid from leaking from the assembly. Typically, the gasket is placed in a predefined location and the mating components are secured together. The gasket forms a compression seal between the components.

It is also well known in the industry that if the gasket is misplaced or is not oriented correctly, or contains a tear, the gasket does not prevent leakage of fluid. One method of overcoming these potential situations is disclosed in U.S. Patent No. 5,116,558. The `558 patent teaches that a gasket or seal may be formed *in situ,* that is, after the mating components have been assembled. The '558 patent teaches that one of the mating components includes a groove where the gasket or seal is to be formed. The mating components are assembled and a gasket-forming material is injected into the groove, where it polyermises to form the seal. The `558 patent specifically teaches the chemical compositions of various materials which can be used as such a seal.

However, the `558 patent does not address the problem of identifying whether the gasket or seal has been correctly formed between the mating components. The only way to know whether the seal is functional in the `558 patent is to either test the assembly, a long and tedious process, or to disassemble the assembly and look at the seal, thus destroying the seal between the components. It would be advantageous to provide some means for identifying whether the seal formed *in situ* is functional without destroying the seal or testing the assembly.

EPA 0671575 discloses an apparatus for forming a gasket between mating components having a groove formed on a mating surface thereof and an inlet port in fluid contact with the groove, comprising a single material cylinder having an orifice and an open end, being operative to receive a volume of a fluid material therein, a displacement ram forcing fluid material through the orifice, a nozzle to engage the inlet port formed in one of the mating components and to discharge the gasket-forming compound through the inlet port into the groove. EPA 0630729 discloses an apparatus for mixing two fluid materials (but not gasket-forming materials) to form a compound, comprising a pair of material receiving cylinders and a pair of displacement rams, and a mixing tube with an inlet end and a discharge end in fluid communication with the cylinders. JP-A-6,055,554 discloses an apparatus for on-spot moulding of gaskets which includes a chiller for slowing the chemical reaction of the gasket-forming composition.

According to the invention we provide an apparatus for forming a gasket between mating components, at least one of the mating components having a groove formed on a mating face thereof and an inlet port in fluid communication with the groove, the apparatus comprising: a pair of material receiving cylinders, each cylinder having a orifice at one end thereof and an open end at the opposite end thereof, each of said cylinders being operative to receive a volume of fluid material therein; a pair of positive displacement rams disposed at the open end of each of the cylinders, each ram being operative reciprocate within said cylinder and contact the fluid material in the cylinder and force the fluid material through the orifice when pressurised; a generally cylindrical mixing tube in fluid communication with said material receiving cylinders, the mixing tube having an inlet end and a discharge end and being operative to receive the fluid materials from each cylinder and mix the fluid materials together to form a gasket-forming compound; a nozzle in fluid communication with the discharge end of the mixing tube, the nozzle being configured to engage the inlet port formed in one of the mating components and to discharge the gasket-forming compound from the mixing tube through the inlet port into the groove; a volume sensor connected to the rams for measuring the volume of gasket-forming compound discharged through the orifices; pressure sensors connected to the cylinders or on the rams; and a pressure sensor for measuring the pressure of the gasket-forming compound between the mixing tube and the nozzle; volume sensor and pressure sensors each being connected to a central processing unit which is adapted to determine whether a formed gasket is viable.

It is an advantage of the present invention that a seal may be formed between two components in an automated process at significantly reduced cost than other known processes.

It is a further advantage of the present invention that a viable seal is formed between two components which functions by a combination of perfect fit, adhesion characteristics of the material used to make the seal, and seal material swelling and expansion caused by absorption of the fluid in the assembly coupled with an elevation in seal temperature.

The invention will now be described, by way of example, with reference to the accompanying drawings, in which:
Figure 1 is a perspective view of an apparatus for forming a seal in accordance with the principles of the present invention;
Figure 2 is an elevational view of a component having a groove structured in accordance with the principles of the present invention;
Figures 3A and 3B are enlarged, cross-sectional views of inlet ports used in the process of the present invention; and
Figure 4 is a graphic representation of an injection pressure versus time plot for the process of the present invention.

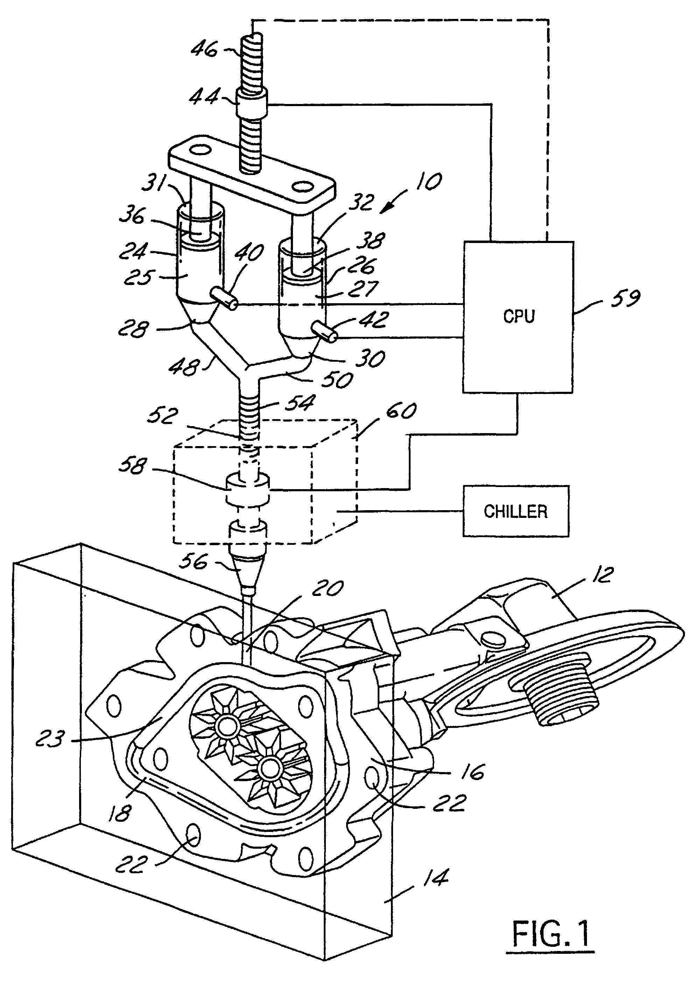

Referring now to the drawings, Figure 1 shows a liquid injection sealing apparatus 10 structured in accordance with the principles of the present invention. The apparatus 10 shown in Figure 1 can be used for forming a variety of different seals or gaskets, and as shown, is fabricating a seal between an oil pump 12 and an engine block 14. The present invention can be used in a variety of other, non-automotive applications as well, especially where a static compression seal is needed between two components, such as in the machine industry. Although the present invention is being described with reference to automotive applications, the present invention is not meant to be limited to such applications. Furthermore, as used herein, the terms "seal" or "gasket" are used interchangeably to mean compression seals.

As shown in Figure 1, one face 16 of the oil pump 12 is secured to a mating face (not shown) on the engine block (represented by 14) by fasteners 22. The face 16 of the oil pump includes a groove 18 and an inlet port 20 in which the seal 23 is formed and as will be described in greater detail below.

The liquid injection sealing apparatus 10 for forming a gasket or seal between mating components includes a pair of syringe-like, material receiving cylinders 24, 26, each having an orifice 28, 30, respectively at one end and a generally open end 31, 32 respectively, at the opposite end thereof. The cylinders 24, 26 contain a volume of generally fluid materials therein, these materials, when mixed together, form a gasket-forming material. The apparatus 10 is shown as having two separate cylinders 24, 26, but the present invention contemplates that a single cylinder may be used as well.

In the preferred embodiment, one cylinder 24 includes a base material 25 while the second cylinder 26 includes a catalyst material 27. When the base and catalyst materials are combined, they form a sealing compound which can be injected into a groove between mating components. An example of materials which can be used are liquid silicone rubbers, such as ER07005A&B, available from Wacker Silicone Corporation in Adrian, Michigan. Other examples of materials which can be used are found in U.S. Patent No. 5,116,558, the disclosure of which is hereby incorporated by reference. The apparatus 10 of the present invention can be used for any single, two-part or multiple part synthetic polymeric materials such as liquid rubbers.

The injection apparatus 10 further includes a pair of positive displacement rams 36, 38 disposed in cylinders 24, 26, respectively. The rams 36, 38 reciprocate within the cylinders to contact the materials therein and force the materials through their respective orifices 28, 30. In operation, the cylinders 24, 26 are filled by either air operated buckets pumps or cartridges. To fill the cylinder, an inlet valve (not shown) to each cylinder is opened and the rams 36, 38 are retracted to draw the materials into the cylinders. During refill, the material pressure is monitored by pressure sensors 40, 42 in the cylinders or on the rams to insure that the pressure does not drop below a preset minimum. This is done for two reasons: first, if the cylinder pressure is negative, a potential exists for pulling air into the cylinder past the ram seals. Secondly, if the buckets or cartridges run out of material, they will not be able to supply the pressure to fill the cylinders and the machine 10 will stop due to low cylinder inlet pressure. Examples of pressure sensors 40, 42 which can be used are made by Sensotec of Columbus, Ohio.

Once the cylinders 24, 26 are full, the inlet valves shut and the rams 36, 38 are run forward (or down) with the orifices 28, 30 closed. This has two effects: first, it brings the cylinders up to a preset pressure prior to the injecting process which minimises the volume measurement errors due to compressibility in the material. Second, the distance that the rams move and the change in pressure are used to measure air in the material. If air is present, steps can be taken to purge the cylinder(s) and resume normal operations.

As further shown in Figure 1, each of the rams 36, 38 is connected to a volume sensor 44. Volume sensing is done by measuring the positive displacement of the rams on the threaded rod 46 as the rams 36, 38 push the material 25, 27, respectively, through the orifices 28, 30. By measuring the distance rams travel through the number of revolutions of threaded rod 46, and knowing the diameter of the rams, a volume of material can be determined. As shown in Figure 1, the rams 36, 38 travel in coincidence, but the present invention contemplates that independent travel can easily be arranged.

As the rams 36, 38 push the materials of the cylinders 24, 26, the materials flow through the orifices 28, 30, through a pair of conduits 48, 50 and into a mixing tube 52. The mixing tube 52 is generally cylindrical and includes a static mixing member 54 which causes the two materials to mix together. The mixing tube combines the base and catalyst materials into a viscous, gasket-forming compound which is injected through a nozzle 56 into the inlet port 20 of the assembly. Another pressure sensor 58 is disposed between the mixing tube 52 and the nozzle 56 which measures the pressure of the gasket-forming compound as it is being injected into the assembly. The pressure sensors 40, 42 on each cylinder, pressure sensor 58 and the volume sensor 44 are each connected to a central processing unit such as a microprocessor 59. The microprocessor 59 receives signals from these sensors and determines whether the seal is viable as will be explained below. The microprocessor can include a visual display terminal which is capable of giving a visual or audio warning to an operator.

The apparatus 10 may further include a chiller, shown schematically in Figure 1 at 60. The chiller 60 lowers the temperature of the gasket-forming compound found in the mixing tube 54 and the nozzle 56. As is widely known, the combination of a base material and a gasket material into a gasket-forming compound typically polymerises into a hardenable material quickly at room temperature. If the machine 10 of the present invention is left unattended and not used, the gasket-forming compound could harden within the nozzle, preventing further injection of material through it. This necessitates either replacing or cleaning the nozzle, an expensive option. By providing a chiller to decrease the temperature of the compound within the nozzle, polymerisation does not take place until the compound is in the groove of the assembly, thus saving time and money. A typical chiller to cool the nozzle is made by Neslabs Instruments which has offices in Plainfield, Illinois. This type of chiller is a recirculating chiller with an antifreeze solution which cools the nozzle to 0 degrees Celsius or less to slow the reaction time from a few minutes to almost sixty minutes.

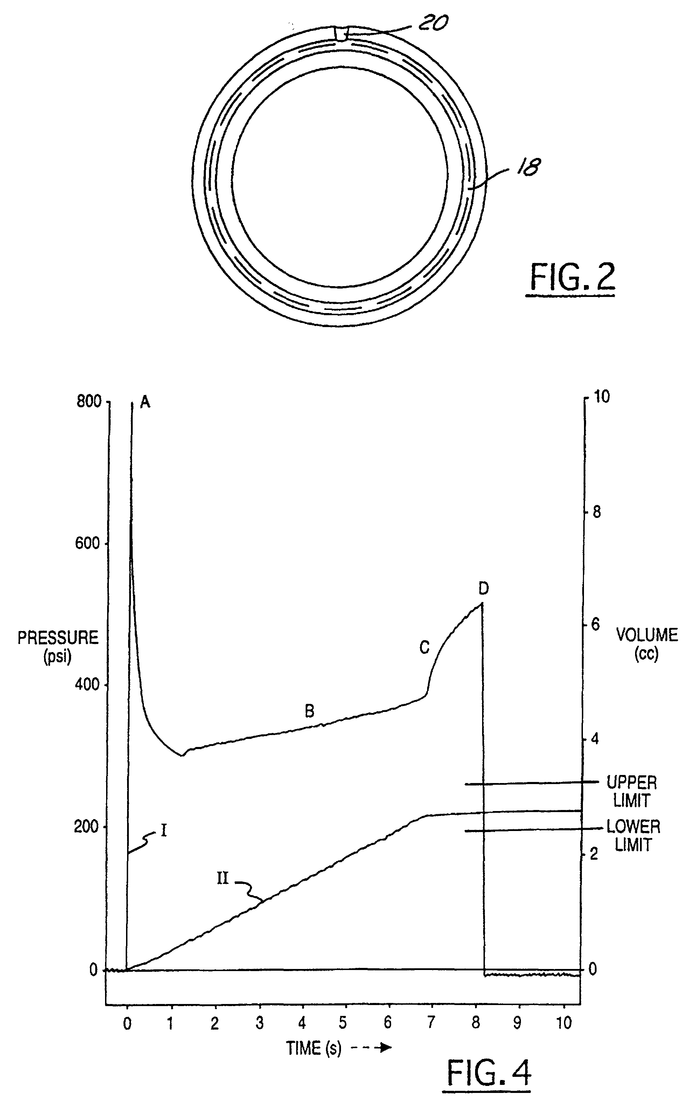

As described briefly earlier, one or both of the mating faces to be joined includes a groove 18. As shown in Figure 2, the groove may be cast in the part, or machined. The groove 18 typically is formed only in one face, but may be formed in both. The surface roughness of the groove itself is not a design issue as it may be in prior art gaskets. In general, within reason, the rougher the groove the better to provide increased surface area for the seal to join. A normal production die-cast finish works well. The groove should not contain any cracks, breaks or severe porosity in the continuity of the groove as these will result in an incomplete filling due to the material exiting the groove through such a break. An ideal groove design includes a half-round bottom and no sharp edges.

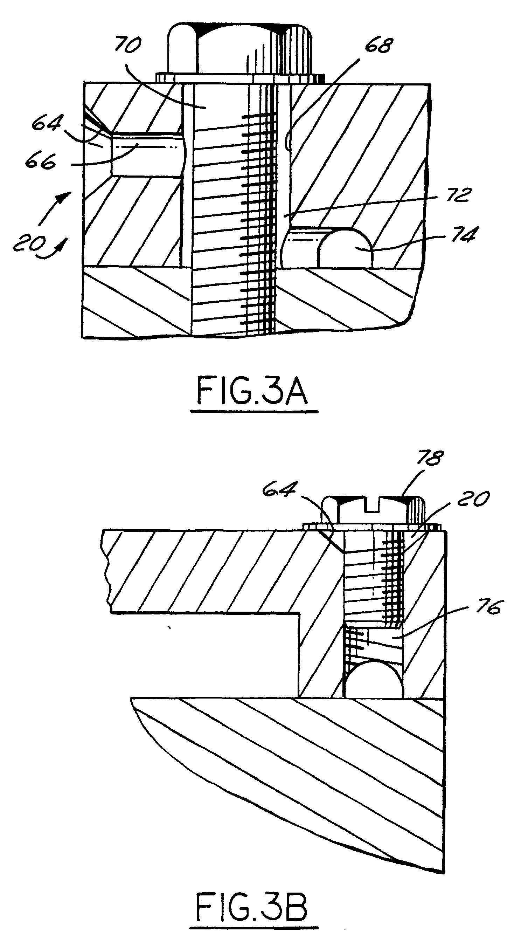

Figures 3A and 3B show alternative designs for inlet or injection ports 20. The inlet port 20 provides the inlet path for the sealant material and prevents extrusion of the seal out of the port. This occurs when the seal 23 attempts to push back out the inlet port 20 due to the internal pressure generated by the thermal expansion of the seal. When the seal pushes, or extrudes, back through the injection port 20, it tears itself and fails. The injection port 20 must allow the nozzle 56 to seal against the assembly while injecting. Typically a conical shaped port entrance 64 with a spherical nylon injection tip can be used. Two different types of inlet ports are shown: Figure 3A shows a constrained port while Figure 3B shows a plugged port. The ideal port location is one where the port could be cast in so that it only needs to be cleaned out with a drill and not machined in completely. It should also be in a location where it is accessible for both injection in the plant and reinjection after servicing of the assembly in the field.

The constrained port 66 of Figure 3A provides restriction to prevent the seal from extruding back through the port when the assembly heats up in service. The preferred design for accomplishing this requires that the inlet port 66 run through a fastener column 68 to that the material wraps around the fastener 70 in the clearance volume 72 between the fastener 70 and the hole 68 and then proceeds into the groove 74 on the far side of the fastener.

The plugged port 76 shown in Figure 3B uses a self tapping screw 78 or other plug-like device that is inserted into the port 76 immediately after the seal material is injected. In this design, the port can be placed almost anywhere and does not need to be restrictive.

The method of the present invention will now be described. It is important that the groove be reasonably clean and dry prior to injection. Any fluid present in the groove will be pushed ahead of the sealant material and create a dam as the two streams of sealant material meet. This prevents the seal from joining and results in an incomplete seal.

After the groove and inlet ports are formed, the mating components to be assembled are secured together. The nozzle 56 of the liquid injection sealing machine 10 is placed in the inlet port and the rams 36, 38 push the base and catalyst materials into the mixing tube 52. The mixing tube 52 combines the materials into the sealant or gasket forming compound which is then forced through the nozzle 56. Nozzle pressure and volume are monitored and the injection is complete when either the nozzle pressure reaches a preset shut-off pressure or the maximum volume limit of material is reached. The rams 36, 38 are then stopped, the nozzle is closed and pulled away from the assembly. If necessary the inlet port is plugged. At this point the cylinders begin refilling. While being injected, the sealant material typically flows in two directions in the groove, meeting at one point.

The method of the present invention insures that a viable seal is formed. By measuring both nozzle pressure and sealant volume dispensed, it can be determined whether the seal is viable. The sealant material is injected at a predetermined rate while monitoring both volume and material back pressure at the nozzle 56. When the groove is filled completely, the nozzle back pressure rises rapidly until a preset limit is reached. When that pressure limit is reached, injection is stopped. The apparatus 10 checks the volume of material against preset maximum and minimum limits. If the volume injected is within these limits, the seal is considered viable. If the maximum volume is achieved before the pressure limit is reached, the apparatus assumes a leak is present and injection is stopped. The seal is considered not viable. A signal to an operator, such as a flashing light or warning sound can be given. If the apparatus 10 shuts off based on the nozzle pressure, but the volume injected is below the volume minimum, then either a blocked groove or a plugged mixer is causing the excessive back pressure and the seal is considered not viable. Again, a warning can be given to an operator.

Figure 4 graphically shows the injection control strategy of the present invention. Figure 4 plots injection pressure versus time on Line I and sealant volume injected versus time at Line II. As can be seen in Line I, at point A, a pressure spike from the nozzle first opening is shown. This spike quickly falls off, then the pressure slowly rises as the groove fills (point B). At point C, a rapid pressure is seen when the groove is full. When this pressure reaches the preset shutoff limit (point D), the nozzle is closed. Line II gradually rises over time as the volume of sealant is injected into the groove. The upper and lower volume limits are shown, and as explained above, the injected volume must be between these limits for a seal to be considered viable (point E).

The present invention further contemplates that the change in pressure over time, dp/dt can be measured during injection. By measuring this change, the nozzle could be shut off when this change reached a preset limit. For example, change in pressure over time greatly increases at point C versus point B. This would allow stopping the injection slightly before the preset shutoff limit is reached, thus reducing excess volume.

## Claims

1. An apparatus for forming a gasket between mating components, at least one of the mating components having a groove (18) formed on a mating face thereof and an inlet port (20) in fluid communication with the groove, the apparatus comprising:
a pair of material receiving cylinders (24,26), each cylinder having an orifice (28,30) at one end thereof and an open end (31,32) at the opposite end thereof, each of said cylinders (24,26) being operative to receive a volume of fluid material therein;
a pair of positive displacement rams (36,38) disposed at the open end of each of the cylinders, each ram being operative reciprocate within said cylinder and contact the fluid material (25,27) in the cylinder and force the fluid material through the orifice (28,30) when pressurised;
a generally cylindrical mixing tube (52) in fluid communication with said material receiving cylinders, the mixing tube having an inlet end and a discharge end and being operative to receive the fluid materials from each cylinder and mix the fluid materials together to form a gasket-forming compound;
a nozzle (56) in fluid communication with the discharge end of the mixing tube (52), the nozzle (56) being configured to engage the inlet port formed in one of the mating components and to discharge the gasket-forming compound from the mixing tube (52) through the inlet port (20) into the groove (18);
a volume sensor (44) connected to the rams (36,38) for measuring the volume of gasket-forming compound discharged through the orifices (28,30);
pressure sensors (40,42) connected to the cylinders (24,26) or on the rams (36,38); and
a pressure sensor (58) for measuring the pressure of the gasket-forming compound between the mixing tube (52) and the nozzle (56);
volume sensor (44) and pressure sensors (40,42 and 58) each being connected to a central processing unit (59) which is adapted to determine whether a formed gasket is viable.

2. An apparatus according to claim 1, including means for slowing the chemical reaction of the two materials while in the mixing tube (52).

3. An apparatus according to either claim 1 or claim 2, including a chiller for lowering the temperature of the mixing chamber.

## Patentansprüche

1. Einen Apparat zur Bildung einer Dichtung zwischen zusammenpassenden Bauteilen, wobei mindestens eines der zusammenpassenden Bauteile eine auf einer zusammenpassenden Fläche hiervon gebildete Nut (18) aufweist, und eine Einlaßöffnung (20) in Fluidverbindung mit der Nut, und wobei der Apparat umfaßt:
ein Paar Material aufnehmende Zylinder (24, 26), wobei jeder Zylinder eine Öffnung (28, 30) an einem Ende davon und ein offenes Ende (31, 32) am gegenüberliegenden Ende davon aufweist, und jeder dieser Zylinder (24, 26) arbeitet um darin ein Volumen flüssigen Materials aufzunehmen;
ein Paar am offenen Ende jedes der Zylinder angeordneter Verdrängerkolben (36, 38), wobei jeder Kolben innerhalb dieses Zylinders hin- und herbewegend arbeitet und das flüssige Material (25, 27) in dem Zylinder berührt und das flüssige Material durch die Öffnung (28, 30) hindurch zwängt, wenn er mit Druck beaufschlagt wird;
ein allgemein zylindrisches Mischrohr (52) in Fluidverbindung mit diesen Material aufnehmenden Zylindern, wobei das Mischrohr ein Einlaßende und ein Auslaßende aufweist und arbeitet um die flüssigen Materialien aus jedem Zylinder aufzunehmen und die flüssigen Materialien zusammen zu mischen, um eine dichtungsbildende Verbindung zu bilden;
eine mit dem Auslaßende des Mischrohrs (52) in Fluidverbindung stehende Düse (56), wobei die Düse (56) konfiguriert ist um die in einem der zusammenpassenden Bauteile gebildete Einlaßöffnung anzugreifen, und um die dichtungsbildende Verbindung aus dem Mischrohr (52) durch die Einlaßöffnung (20) hindurch in die Nut (18) hinein zu entleeren;
einen mit den Kolben (36, 38) verbundenen Volumensensor (44), um das Volumen der durch die Öffnungen (28, 30) hindurch ausgestoßenen dichtungsbildenden Verbindung zu messen;
mit den Zylindern (24, 26) verbundene oder auf den Kolben (36, 38) befindliche Drucksensoren (40,42); und
einen Drucksensor (58), um den Druck der dichtungsbildenden Verbindung zwischen dem Mischrohr (52) und der Düse (56) zu messen;
einen Volumensensor (44) und Drucksensoren (40, 42 und 58), die jeweils mit einer Zentraleinheit (59) verbunden sind, welche angepaßt ist um zu bestimmen ob eine gebildete Dichtung funktionsfähig ist.

2. Ein Apparat gemäß Anspruch 1, der Vorrichtungen einschließt um die chemische Reaktion der beiden Materialien zu verlangsamen, während sie sich im Mischrohr (52) befinden.

3. Ein Apparat gemäß entweder Anspruch 1 oder Anspruch 2, der einen Kühler einschließt um die Temperatur der Mischkammer zu senken.

## Revendications

1. Dispositif destiné à former une garniture entre des composants correspondants, au moins l'un des composants correspondants comportant une gorge (18) formée sur une face correspondante de celui-ci et un orifice d'entrée (20) en communication de fluide avec la gorge, le dispositif comprenant :
une paire de cylindres de réception de matériau (24, 26), chaque cylindre comportant un orifice (28, 30) au niveau d'une première extrémité de celui-ci et une extrémité ouverte (31, 32) au niveau de l'extrémité opposée celui-ci, chacun desdits cylindres (24, 26) agissant pour recevoir un volume de matériau de fluide dans celui-ci,
une paire de pistons à déplacement positif (36, 38) disposés au niveau de l'extrémité ouverte de chacun des cylindres, chaque piston agissant pour effectuer un mouvement de va-et-vient à l'intérieur dudit cylindre et venir en contact avec le matériau de fluide (25, 27) dans le cylindre et forcer le matériau de fluide à travers l'orifice (28, 30) lorsqu'il est mis sous pression,
un tube de mélange généralement cylindrique (52) en communication de fluide avec lesdits cylindres de réception de matériau, le tube de mélange comportant une extrémité d'entrée et une extrémité d'évacuation et agissant pour recevoir les matériaux de fluide provenant de chaque cylindre et mélanger les matériaux de fluide ensemble afin de former un composé de formation de garniture,
une buse (56) en communication de fluide avec l'extrémité d'évacuation du tube de mélange (52), la buse (56) étant configurée pour venir en contact avec l'orifice d'entrée formé dans l'un des composants correspondants et pour évacuer le composé de formation de garniture depuis le tube de mélange (52) à travers l'orifice d'entrée (20) dans la gorge (18),
un détecteur de volume (44) relié aux pistons (36,38) destiné à mesurer le volume de composé de formation de garniture évacué à travers les orifices (28, 30),
des capteurs de pression (40, 42) reliés aux cylindres (24, 26) ou aux pistons (36, 38), et
un capteur de pression (58) destiné à mesurer la pression du composé de formation de garniture entre le tube de mélange (52) et la buse (56),
un détecteur de volume (44) et des capteurs de pression (40, 42 et 58) étant reliés chacun à une unité de traitement centrale (59) qui est conçue pour déterminer si la garniture formée est viable.

2. Dispositif selon la revendication 1, comprenant un moyen destiné à ralentir la réaction chimique des deux matériaux tandis qu'ils se trouvent dans le tube de mélange (52).

3. Dispositif selon soit la revendication 1, soit la revendication 2, comprenant un dispositif de refroidissement destiné à diminuer la température de la chambre de mélange.
